(19) Europäisches Patentamt
European Patent Office
Office européen des brevets

(11) Publication number: 0 108 886
A2

# (12) EUROPEAN PATENT APPLICATION

(21) Application number: 83109141.8

(22) Date of filing: 15.09.83

(51) Int. Cl.[3]: C 08 F 230/08, B 29 D 11/02
// (C08F230/08, 220/20)

(30) Priority: 20.09.82 US 419810

(43) Date of publication of application: 23.05.84
Bulletin 84/21

(84) Designated Contracting States: AT BE CH DE FR GB IT LI LU NL SE

(71) Applicant: AMERICAN OPTICAL CORPORATION,
14 Mechanic Street, Southbridge, MA 01550 (US)

(72) Inventor: Leboeuf, Albert R., 10 Shepard Road, Sturbridge Massachusetts 01701 (US)
Inventor: Singer, Helmut K., 11 Carolyn Terrace, Southborough Massachusetts 01772 (US)

(74) Representative: Popp, Eugen, Dr. et al, Patentanwälte Popp, Sajda, v. Bülow, Hrabal & Partner
Widenmayerstrasse 48 Postfach 86 06 24,
D-8000 München 86 (DE)

## (54) Silicone-containing hard contact lens materials having increased oxygen permeability.

(57) This invention relates to an improved hard contact lens polymeric material comprising a siloxane-based ester monomer, solely, or in combination with methacrylic acid-derived cross-linking agents, alkanol esters, and/or hydrophilic monomers. Hard contact lenses made from these polymeric materials have an increased oxygen permeability and surface wettability and thus have potential use in extended-wear lens applications.

EP 0 108 886 A2

# SILICONE-CONTAINING HARD CONTACT LENS MATERIALS HAVING INCREASED OXYGEN PERMEABILITY

## BACKGROUND OF THE INVENTION

This invention relates to a siloxane-based hard contact lens material with improved gas permeability and surface wettability characteristics.

Hard and soft contact lenses can correct visual defects such as myopia (nearsightedness) or hyperopia (farsightedness); but, both types of lenses have specific advantages and problems.

Conventional hard contact lenses, first developed in 1940, are made from polymethylmethacrylate (PMMA). Hard contact lenses have several advantages over conventional soft contact lenses; they have better visual acuity, can correct astigmatism, are less expensive, easier to care for, are more durable, and can be tinted, polished to remove scratches, or reground to make slight changes in prescription or fit. Hard contact lenses, however, have several problems or disadvantages: Several weeks are required for comfortable adjustment; and they must be worn almost daily to maintain this tolerance; and, they restrict oxygen flow to the cornea, because of low permeability, which can cause corneal edema or swelling, corneal infections, vascularization (growth of blood vessels into the cornea), or blurred vision. The cornea must be periodically allowed to recuperate and replenish its oxygen by removing the lens; thus, hard contact lenses of PMMA are unacceptable for extended-wear use. Hard PMMA contact lenses normally have an oxygen permeability range of 0.1-0.5 Barrier Units (BU).

Soft contact lenses were developed to offset many of the problems associated with hard contact lenses and account for the majority of the contact lens market. Conventional soft contact lenses are generally made from hydrophilic polyhydroxy-ethylmethacrylate or hydrophobic silicon rubber. Advantages of soft contact lenses are: there is less sensation of a foreign body than with hard contact lenses, thus the wearer more readily adjusts to them; they do not irritate the eyelid and cornea as much because of their flexibility; and, they fit more snugly on the cornea keeping out much of the dust and particles which can cause discomfort to a hard-lens wearer. Soft contact lenses, however, are expensive, must be replaced more frequently because they are more fragile, require expensive daily lens care which is also time-consuming, become soiled during wear from tears circulating between the cornea and lens, and must be replaced if a new precription or fit is required. Specific problems associated with silicon rubber soft contact lenses are: they tend to produce a burning sensation because they are hydrophobic and differ from the cornea in thermal properties, such as thermal conductivity and thermal diffusivity; they have very low strength; and, they make machining very difficult, due to their softness and elasticity. Conventional soft contact lenses are composed of up to 40% water by weight, which allows more oxygen flow to the cornea than a conventional hard contact lens. Even with this high water content, the oxygen flow to the cornea is insufficient for extended-wear applications. In addition, soft contact lenses may tend to shrink in a dry or heated environment because of this high water content, causing poor and fluctuating visual acuity, and eye irritation or vision blurring.

High-water content soft contact lenses composed of 60% to 90% water by weight have been developed for extended-wear use; but, even this increased amount of water is often insufficient in solving corneal respiration problems (lack of oxygen). Additionally, these lenses are fragile, expensive, must be cleaned periodically because of a protein buildup from tears, have a lower visual acuity from shrinkage due to water evaporation, and may discolor. Soft contact lens materials normally have the following oxygen permeability ranges; 6-9 BU with a water content of 40%-45% by weight, 10-14 BU with a water content of 50%-60% by weight, and 24-40 BU with a water content of 70%-90% by weight.

Hard contact lenses with an increased gas permeability, commonly known as gas-permeable lenses, have been developed to overcome problems associated with conventional hard and soft contact lenses. Gas-permeable contact lenses are generally made from cellulose acetate butyrate (CAB) or from a copolymer of PMMA and silicone. Gas-permeable lenses are durable, have high visual acuity, and as their name infers, allow oxygen to flow directly to the cornea. Prior art gas-permeable hard contact lenses, however, tend to have insufficient oxygen permeability for extended-wear applications.

SUMMARY OF THE INVENTION

To overcome many of the aforementioned problems associated with prior art hard and soft contact lenses, it is an object of this invention to provide a hard, gas-permeable contact lens material with an increased gas permeability (8-20 BU), good durability, compatibility with corneal tissue, good visual acuity, and relative ease in machining, with potential use for extended-wear lens applications.

It is further object of this invention to increase the surface wettability characteristics of this contact lens material by the addition of reactive surfactants, thus making the lens more comfortable for wear.

According to the present invention, the improved contact lens materials comprise: 1) a copolymer of: a) about 15% to 40% by weight of tris (trimethylsiloxyl) methacryloxypropyl-silane (TRIS), b) about 10% to 80% by weight of at least one cross-linking agent which

is a derivative of methacrylic acid, and, c) about 0% to 60% by weight of an alkanol ester and/or a hydrophilic monomer; or, 2) a homopolymer essentially of one of the following siloxane-based monomers: a) bis (methacryloxypropyl)octamethyltetra-siloxane (BMOS), a siloxane-based cross-linking agent, or, b) bis(methacryloxypropyl)tetramethyldisiloxane (MOTS), a siloxane-based cross-linking agent, or, c) methacryloxypropyl-pentamethyl-disiloxane (MPPS), a siloxanyl alkyl ester monomer.

Unique features of the siloxane-based ester monomers of this invention are; an enhanced fluid and gas transmission because of their specific permeable intermolecular structures, as well as a good chemical compatibility with corneal tissue. Surfactants used for the purposes of this invention, such as polyethylene glycol dimethacrylate (n=10-11, molecular weight=600), PEGDMA-600, and polyethyleneoxidedimethylsiloxane block copolymer: dimethacrylate, DMA/Q4-3667, modify the surface wettability of the copolymers which makes the lenses more comfortable for wear. Hydrophilic monomers used in this invention, such as 2-hydroxyethyl methacrylate (HEMA) and n-vinyl pyrrolidone (NVP) also increase the wettability of the polymer because of their inherent "hydrophilic" properties. Other monomers included in the materials of this invention act as modifiers to achieve desired levels of polymer flexibility or rigidity.

## DESCRIPTION OF PREFERRED EMBODIMENTS

The novel copolymer of the present invention preferably contains: a) 20% to 40% by weight of the siloxane-based ester monomer TRIS, b) 40% to 80% by weight of methacrylic acid-derived cross-linking agents, and, c) 0% to 20% by weight of an alkanol ester and/or a hydrophilic monomer.

Novel homopolymers of the present invention preferably contain essentially 100% of either of the

following siloxane-based ester monomers: a) BMOS, or, b) bis(methacryloxypropyl)tetramethyldisiloxane (MOTS), or, c) MPPS.

General structural formulas of the siloxane-based ester monomers are as follows:

tris(trimethylsiloxyl)methacryloxypropylsilane (TRIS)

(Syn-17)

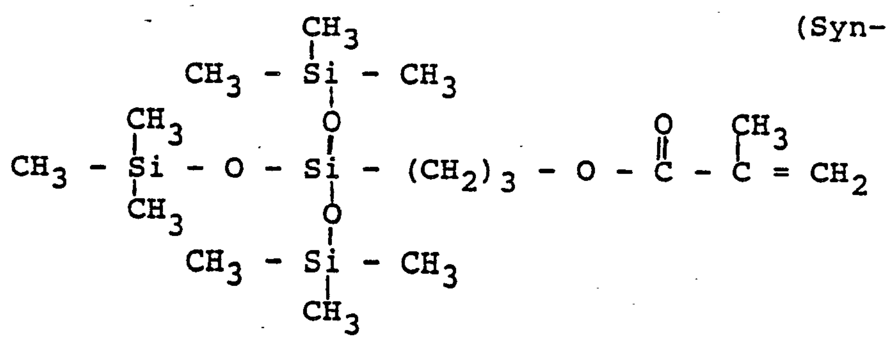

or

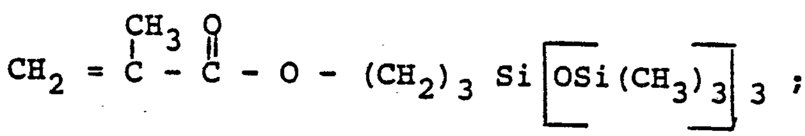

bis(methacryloxypropyl)octamethyltetrasiloxane (BMOS)

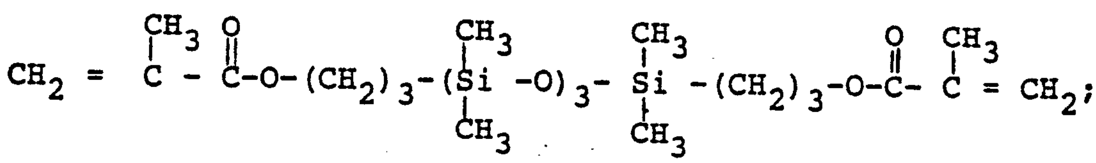

bis(methacryloxypropyl)tetramethyldisiloaxne (MOTS)

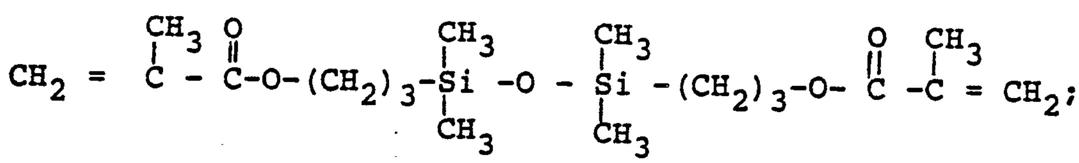

methacryloxypropylpentamethyldisiloxane (MPPS)

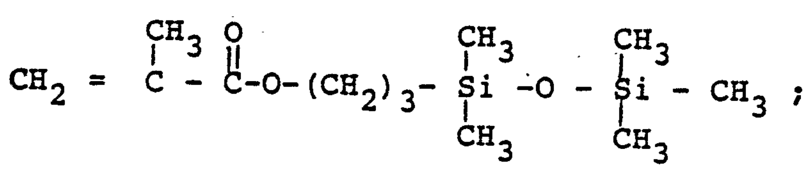

Tris(trimethylsiloxy)methacryloxypropargyl silane (TRIG)

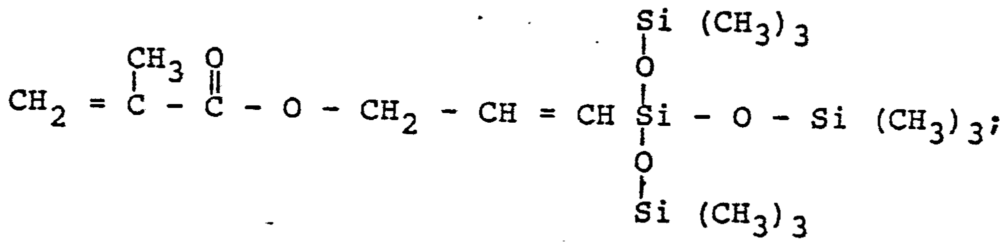

and

1,7 Bis(methacryloxypropargyl)octamethyl tetrasiloxane (MOTG)

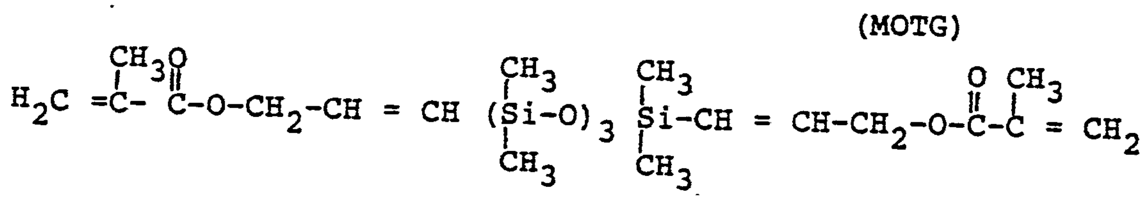

Representative cross-linking agents from methacrylic acids which may be used to form the copolymer of this invention include:

allyl methacrylate (AMA)

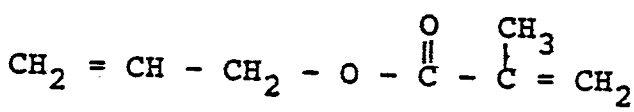

ethylene glycol dimethacrylate (EDMA)

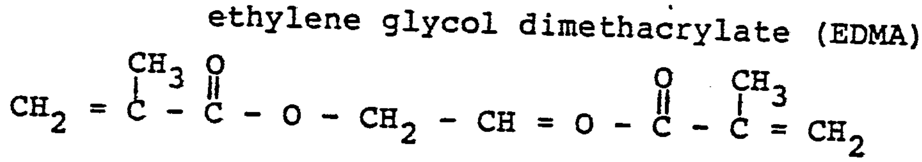

2-allyloxyethyl methacrylate (HALEMA)

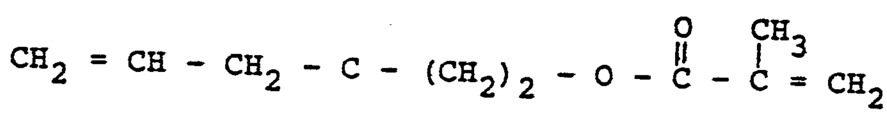

PEGDMA-600

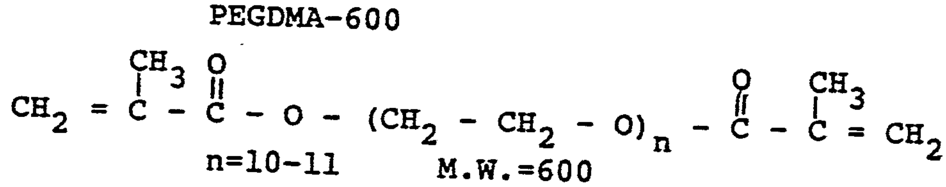

n=10-11 M.W.=600

DMA/Q4-3667

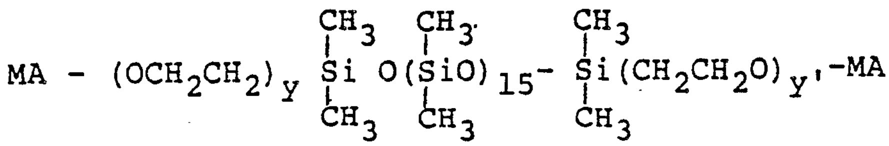

M.W.=2524 y + y' = 26

vinyl methacrylate

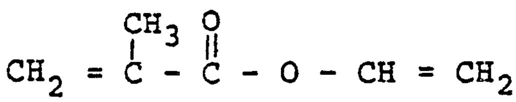

Triethylene glycol dimethacrylate (TREG)

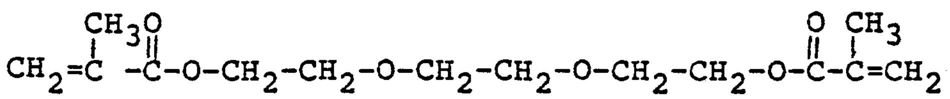

Representative alkanol esters which may be used to form the copolymer of this invention include:

methyl methacrylate (MMA)

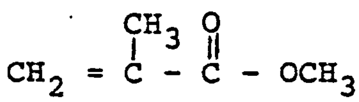

n-butyl methacrylate

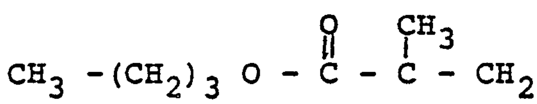

cyclohexyl methacrylate

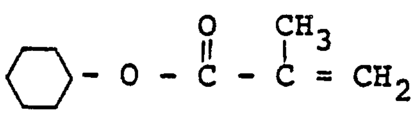

phenyl ethyl methacrylate

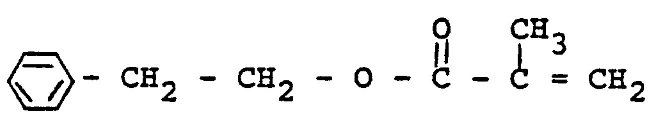

n-propyl methacrylate

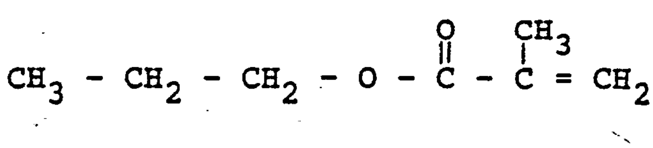

Ethyl Acrylate

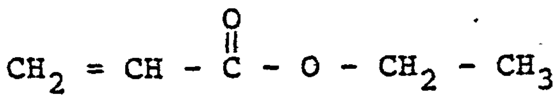

Other agents which perform the same function as the alkanol esters are vinyl benzenes such as:

Vinyl Benzene

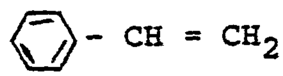

Divinyl Benzene

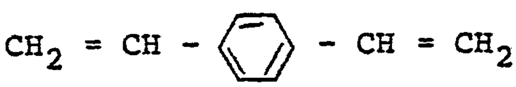

Representative hydrophilic monomers which may be used to form the copolymer of this invention include:

2-hydroxyethyl methacrylate (HEMA)

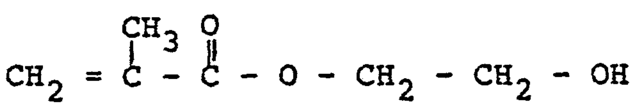

n-vinyl pyrrolidone (NVP)

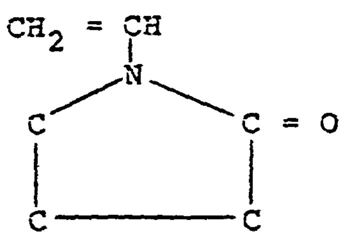

Conventional polymerization techniques are used to produce the polymeric materials. Polymerization can be carried out in a lens mold to directly form the desired contact lens, or in a suitable mold to form sheets which may then be machined into the desired contact lens.

The invention is further illustrated by the following non-limiting examples.

Example 1

A monomer mixture is prepared by combining 40% by weight of TRIS, 40% by weight of allyl methacrylate and 20% by weight of n-propyl methacrylate. To this mixture is added 0.2% by weight of the above mixture of benzoin methyl ether and 0.5% by weight of t-butyl peroctate catalyst. The resulting mixture is placed in a polypropylene lens mold and irradiated for 30 minutes using a 3600 Å ultraviolet source at 4 inches, having a flux of 8400 watts/$cm^2$ at 18 inches. Castings are then postcured at a temperature of 100°C to 110°C for 1 to 2 hours in an air circulating oven. The resulting polymeric contact lens material contains 7% water by weight and has an oxygen permeability of 18 BU.

Example 2

The procedure of Example 1 is followed except that the starting monomer mixture contains 20.3% by weight of TRIS, 39.7% by weight of allyl methacrylate and 40.0% by weight of PEGDMA-600. The resulting polymeric contact lens material has an oxygen permeability of 8.3 BU.

Example 3

The procedure of Example 1 is followed except that the starting monomer mixture contains 19.9% by weight of TRIS, 40.0% by weight of PEGDMA-600, 35.0% by weight of HALEMA, and 5.1% by weight of n-propyl methacrylate. The resulting polymeric contact lens material has an oxygen permeability of 8 BU.

Examples 4-7

The procedure of Example 1 is followed except that the starting monomer mixtures contain the following constituents and proportions as listed in Table 1.

Table 1

Compositions and Proportions of Starting Monomers to Form Copolymer

| Ex. | TRIS | NPMA | AMA | EDMA | PEGDMA -600 | HEMA | NVP | DMA/ Q4-3667 | HALEMA |
|---|---|---|---|---|---|---|---|---|---|
| 4 | 29.5 | 29.7 | 29.9 | 10.8 | - | - | - | - | - (SUM=99.9) |
| 5 | 22.9 | 31.1 | - | - | 18.0 | 18.0 | 10.0 | - | - |
| 6 | 24.7 | 34.5 | - | - | 34.5 | - | - | 6.4 | - (SUM=100.1) |
| 7 | 30.3 | 35.1 | - | - | - | - | - | - | 34.5 (SUM=99.9) |

TRIS=tris(trimethylsiloxyl)methacryloxypropylsilane
NPMA=n-propyl methacrylate
AMA=allyl methacrylate
EDMA=ethylene glycol dimethacrylate
PEGDMA-600=polyethylene glycol dimethacrylate (n=10-11, molecular weight=600)
HEMA=2-hydroxyethyl methacrylate
NVP=n-vinyl pyrrolidone
DMA/Q4-3667=polyethyleneoxide dimethylsiloxane block copolymer:
dimethacrylate
HALEMA=2-allyloxethyl methacrylate

Example 8-14

The procedure of Example 1 is followed except that the starting monomer mixtures contain the following constituents and proportions as listed in Table 2.

Table 2

Compositions and Proportions of Starting Monomers to Form Copolymer

| Ex. | TRIS | PEGDMA -600 | PHEMA | VMA | AMA | DMA/Q4 3667 | NVP | EDMA | HALEMA | MNA |
|---|---|---|---|---|---|---|---|---|---|---|
| 8 | 30.0 | 10.0 | 60.0 | - | - | - | - | - | - | - |
| 9 | 20.2 | 39.7 | - | 40.0 | - | - | - | - | - | - |
| | | | | | | | | | | (SUM=99.9) |
| 10 | 29.5 | 20.5 | - | - | 0.3 | 14.8 | 34.9 | - | - | - |
| 11 | 20.0 | 39.5 | - | - | 20.5 | - | - | 20.0 | - | - |
| 12 | 20.3 | 40.3 | - | - | - | - | - | 40.9 | - | - |
| | | | | | | | | | | (SUM=101.5) |
| 13 | 25.0 | 35.1 | - | - | - | - | - | - | 39.9 | - |
| 14 | 30.0 | 39.8 | - | - | - | - | - | - | - | 30.2 |

TRIS=tris(trimethylsiloxyl)methacryloxypropylsilane
PEGDMA-600=polyethylene glycol dimethacrylate (n=10-11, molecular weight=600)
PHEMA=phenyl ethyl methacrylate
VMA=vinyl methacrylate
AMA=allyl methacrylate
DMA/Q4-3667=polyethyleneoxide dimethylsiloxane block copolymer:
dimethacrylate
NVP=n-vinyl pyrrolidone
EDMA=ethylene glycol dimethacrylate
HALEMA=2-allyloxyethyl methacrylate
MMA=methyl methacrylate

Examples 15-17

The procedure of Example 1 is followed except that the starting monomer mixtures contain the following constituents and proportions as listed in Table 3.

Table 3

Compositions and Proportions of Starting Monomers to Form Copolymer

| Example | TRIS | TREG | AMA | PHEMA | MMA |
|---|---|---|---|---|---|
| 15 | 49.8 | 25.7 | 24.4 | - | -(SUM=99.9) |
| 16 | 49.3 | 24.4 | - | 26.2 | -(SUM=99.9) |
| 17 | 33.1 | 24.9 | - | - | 42.0 |

TRIS=tris(trimethylsiloxyl)methacryloxypropylsilane
TREG=triethyleglycol dimethacrylate
AMA=allyl methacrylate
PHEMA=phenyl ethyl methacrylate
MMA=methyl methacrylate

Example 18

The procedure of Example 1 is followed except that the starting monomer mixture contains 100% by weight of BMOS. The resulting polymeric contact lens material contains 1.7% by weight water and has an oxygen permeability of 20 BU.

Example 19

The procedure of Example 1 is followed except that the starting monomer mixture contains 100% by weight of MOTS bis(methacryloxypropyl)tetramethyldisiloxane. The resulting polymeric contact lens material has an oxygen permeability of 9.5 BU.

Example 20

The procedure of Example 1 is followed except that the starting monomer mixture contains 100% by weight of MPPS. The resulting polymeric contact lens material has an oxygen permeability of 21 BU.

Although the invention has been described with reference to its preferred embodiments, other embodiments can achieve the same results. Variations and modifications of the present invention will be obvious to those skilled in the art and it is intended to cover in the appended claims all such modifications and equivalent as follows in the true spirit and scope of this invention.

What is claimed is:

1. An oxygen-permeable, hard, machinable contact lens material comprising the polymerization product of:

(a) 15% to 40% by weight of tris(trimethylsiloxyl)methacryloxypropylsilane (TRIS), having the following structural formula:

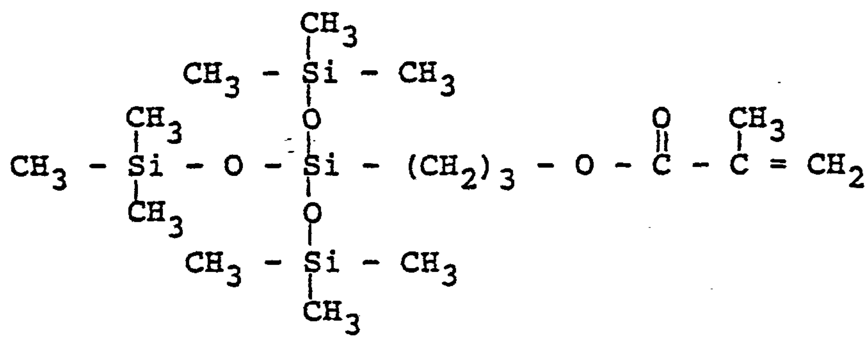

(b) 10% to 80% by weight of at least one cross-linking agent which is a derivative of methacrylic acid, and;

(c) 0% to 60% by weight of an alkanol ester and/or vinyl benzene and/or a hydrophilic monomer.

2. A polymerization product in accordance with claim 1 wherein said cross-linking agents in (b) are selected from the class consisting essentially of allyl methacrylate, ethylene glycol dimethacrylate, 2-allyloxyethyl methacrylate, PEGDMA-600, DMA/Q4-3667, vinyl methacrylate and triethylene glycol dimethacrylate.

3. A polymerization product in accordance with claim 1 wherein said alkanol ester in (c) is selected from the class consisting essentially of methyl methacrylate, n-butyl methacrylate, cyclohexyl methacrylate, phenyl ethyl methacrylate, and n-propyl methacrylate and said vinyl benzene is selected from a member of the group of vinyl benzene and divinyl benzene.

4. A polymerizatiion product in accordance with claim 1 wherein said hydrophilic monomer in (c) is selected from the class consisting essentially of 2-hydroxyethyl methacrylate and n-vinyl pyrrolidone.

5. An oxygen-permeable, hard, machinable contact lens material comprising the polymerization product of bis(methacryloxypropyl)octamethyltetrasiloxane (BMOS) having the following structural formula:

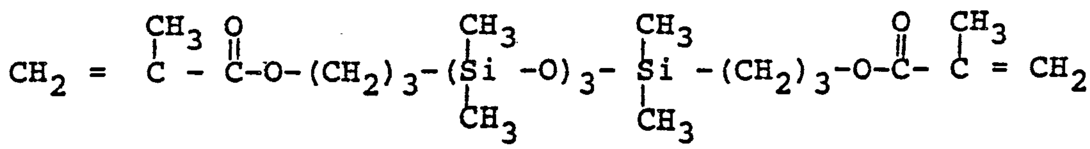

6. An oxygen-permeable, hard, machinable contact lens material comprising the polymerization product of bis(methacryloxypropyl)tetramethyldisiloxane (MOTS) having the following structural formula:

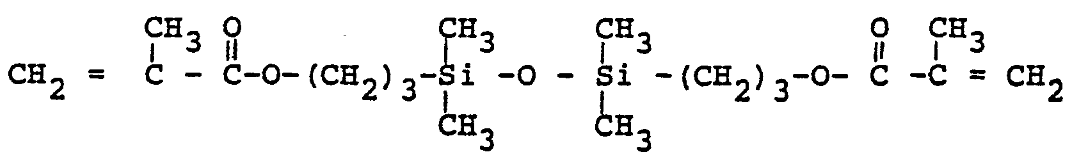

7. An oxygen-permeable, hard, machinable contact lens material comprising the polymerization product of methacryloxypropylpentamethyldisiloxane (MPPS) having the following structural formula:

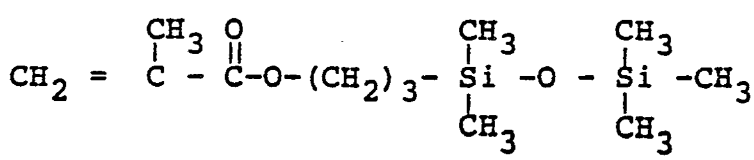

8. An oxygen-permeable, hard, machinable contact lens material comprising the polymerization product of tris(trimethylsiloxy)methacryloxypropargyl silane (TRIG) having the following structural formula:

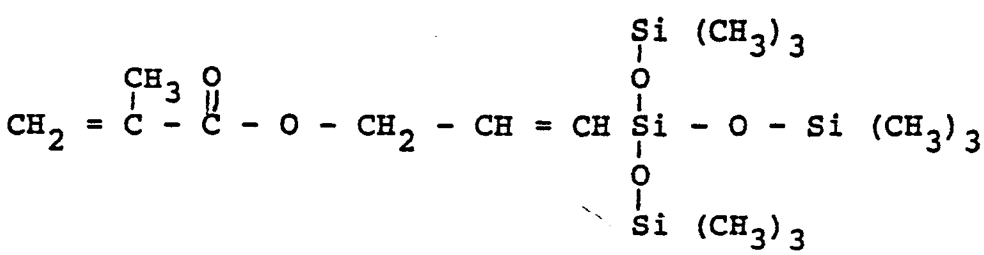

9. An oxygen-permeable, hard, machinable contact lens material comprising the polymerization product of 1,7 Bis(methacryloxypropargyl)octamethyl tetrasiloxane (MOTG) having the following structural formula: